# NEUE EUROPÄISCHE PATENTSCHRIFT

(11) **EP 1 032 476 B2**
(45) Veröffentlichungstag und Bekanntmachung des Hinweises auf die Entscheidung über den Einspruch: **14.11.2007**
(45) Hinweis auf die Patenterteilung: 20.03.2002
(21) Anmeldenummer: 98966234.1
(22) Anmeldetag: 05.11.1998
(51) Int. Cl.: B05D 7/00, B05D 3/06, B05D 5/00

(54) **VERFAHREN ZUR MEHRSCHICHTIGEN LACKIERUNG VON SUBSTRATEN**
METHOD FOR MULTI-LAYERED COATING OF SUBSTRATES
PROCEDE DE LAQUAGE MULTICOUCHE DE SUBSTRATS

(30) Priorität: 20.11.1997 DE 19751481; 20.12.1997 DE 19757080
(43) Veröffentlichungstag der Anmeldung: 06.09.2000
(73) Patentinhaber: E.I. DU PONT DE NEMOURS & COMPANY INCORPORATED, Wilmington, Delaware 19898 (US)
(72) Erfinder: MAAG, Karin, D-79594 Inzlingen (DE); LÖFFLER, Helmut, D-50321 Brühl (DE); LENHARD, Werner, D-42109 Wuppertal (DE)
(74) Vertreter: Gille Hrabal Struck Neidlein Prop Roos
(86) Internationale Anmeldenummer: PCT/EP1998/007081
(87) Internationale Veröffentlichungsnummer: WO 1999/026728

(56) Entgegenhaltungen:
- EP-A- 0 202 803
- EP-A- 0 540 884
- EP-A- 0 849 004
- WO-A-99/08802
- DE-A- 3 105 055
- DE-A- 4 225 105
- DE-A- 4 421 558
- DE-C- 19 510 363
- DE-C- 19 635 447
- GB-A- 2 117 674
- GB-A- 2 210 291
- GB-A- 2 262 055
- US-A- 4 668 529
- US-A- 5 486 384

## Beschreibung

Die Erfindung betrifft ein Verfahren zur Reparaturlackierung von Substraten mit einer Füllerschicht und einer Decklackschicht, welches insbesondere Anwendung findet auf dem Gebiet der Fahrzeug- und Fahrzeugteilelackierung.

Mehrschichtige Fahrzeugreparaturlackierungen bestehen im allgemeinen aus einer auf gegebenfalls vorbeschichtete Substrate aufgebrachten Füllerschicht und einer Deckbeschichtung aus einer farb- und/oder effektgebenden Basislackschicht und einer transparenten Klarlackschicht. Es kann sich jedoch auch um eine Deckbeschichtung aus einem pigmentierten Einschichtdecklack handeln.

Aus ökologischen Gründen ist man bestrebt, auch in der Fahrzeugreparaturlackierung die Lösemittelemission der Beschichtungsmittel zu reduzieren. So sind bereits für nahezu alle Lackschichten wäßrige oder sogenannte High-solid-Beschichtungsmittel entwickelt worden. Für den Füller- und Grundierungsbereich sind beispielsweise zweikomponentige Wasserlacke auf Basis von hydroxyfunktionellen Bindemitteln und Polyisocyanathärtern und auf Basis von Epoxid/Polyamin-Systemen bekannt. Die mit diesen Lacken erhaltenen Beschichtungen entsprechen jedoch in mehreren Punkten noch nicht dem Eigenschaftsniveau konventioneller lösemittelbasierender Füller bzw. Grundierungen. Beispielsweise ist bei den Wasserfüllern die Schleifbarkeit noch unzureichend, und es gibt Probleme, bei höheren Schichtdicken eine blasenfreie Applikation zu gewährleisten.

Insbesondere eine Reduzierung des Lösemittelanteiles in Basislacken, speziell in Effektbasislacken, die mit etwa 80 Gew.-% einen hohen Anteil organischer Lösemittel aufweisen, bringt einen effektiven Beitrag zur Senkung der Lösemittelemission der Gesamtlackierung. Es sind bereits Wasserbasislacke für den Einsatz in der Fahrzeugreparaturlackierung entwickelt worden. Die mit diesen Wasserbasislacken erhaltenen Beschichtungen entsprechen jedoch noch nicht in allen Punkten dem Eigenschaftsniveau konventioneller Basislacke. Beispielsweise sind Wasserfestigkeit, Härte und Zwischenschichthaftung noch unzureichend ausgebildet.

Ähnliche Aussagen sind auch fiir Wasserklarlacke zu treffen. Beispielsweise sind Benzin- und Wasserbeständigkeit sowie Härte und Optik noch zu verbessern.

Außerdem muß beim Einsatz von Wasserlacken generell eine verlängerte Trockenzeit in Kauf genommen werden, was die Effektivität beispielsweise in einer Lackierwerkstatt beeinträchtigt.

Es ist bereits bekannt, in der Fahrzeuglackierung mittels energiereicher Strahlung härtbare Beschichtungsmittel einzusetzen.

Die EP-A-540 884 beschreibt ein Verfahren zur Herstellung einer Mehrschichtlackierung für die Kraftfahrzeugserienlackierung durch Auftrag einer Klarlackschicht auf eine getrocknete bzw. gehärtete Basislackschicht, wobei das Klarlackbeschichtungsmittel durch radikalische und/oder kationische Polymerisation härtbare Bindemittel enthält, und die Härtung mittels energiereicher Strahlung durchgeführt wird. Nach Bestrahlung der Klarlackschicht erfolgt der Einbrennprozeß, wobei Basislack und Klarlack gemeinsam bei z.B. 80 - 160°C eingebrannt werden.

In der EP-A-247 563 werden mittels UV-Strahlung härtbare Klarlacke beschrieben auf Basis einer poly(meth)acryloylfunktionellen Verbindung, eines Polyolmono(meth)acrylates, eines Polyisocyanates, eines Lichtstabilisators und eines Photoinitiators. Ein Teil der strahlenhärtbaren Bindemittel enthält hier noch Hydroxyfunktionen, die mit dem vorhandenen Polyisocyanat reagieren können und eine zusätzliche Härtungsmöglichkeit bieten.

In der EP-A-000 407 werden strahlenhärtbare Überzugsmittel beschrieben auf Basis eines mit Acrylsäure veresterten OH-funktionellen Polyesterharzes, einer Vinylverbindung, eines Photoinitiators und eines Polyisocyanates. In einem 1 Härtungsschritt erfolgt die Strahlenhärtung mittels UV-Licht und in einem 2. Härtungsschritt erhält der Überzug durch die OH/NCO-Vernetzung seine Endhärte.

Der 2. Härtungsschritt kann bei 130 - 200°C oder über mehrere Tage bei Raumtemperatur erfolgen. Die Endhärte wird erst nach mehreren Tagen erreicht.

So beschreibt die US-A-4 668 529 ein mittels UV-Strahlung härtbares 1K-Füllerbeschichtungsmittel für die Reparaturlackierung. Als UV-härtbare Bindemittelkomponenten werden Tripropylenglykoltriacrylat und Trimethylpropantriacrylat eingesetzt. Zusätzlich ist ein Epoxidharz auf Basis eines Bisphenol A-Diglycidylethers enthalten.

Die GB-A-2210291 offenbart ein Ausbesserungsverfahren für einzelne Defekte in einem Lacküberzug, bei dem der Lacküberzug im Bereich des Defekts mittels eines Lasers abgebrannt wird, und in die entstehende Vertiefung Reparaturmischungen eingefüllt werden, die auf verschiedene Arten gehärtet werden kann.

Die EP-A-0202803 offenbart ein Verfahren zum Aushärten einer Beschichtung, das das Aufbringen der einen Fotoinitiator enthaltenden Beschichtung und das anschließende Bestrahlen der Beschichtung mit einem UV-Laser einer bestimmten Wellenlänge umfasst.

Die GB-A-2262055 offenbart ein Lackierverfahren, bei dem auf eine UV-härtende Schicht eine effektgebende Farbschicht aufgebracht wird, auf die wiederum eine UV-härtende Decklackschicht aufgebracht wird. Die Lackierung wird insbesondere bei Faserplatten, wie MDF-Platten angewendet, die zur Möbelherstellung dienen. Für Außenanwendungen ist die erhaltene Lackierung nicht geeignet.

Die nicht vorveröffentlichte EP-A-0849004 offenbart ein Verfahren zur sogenannten "Tandem"-Beschichtung von insbesondere Cellulose-Substraten, wie MDF-Platten, worin mit einem UV-härtbaren Lack und einem Wasserlack beschichtet wird, der thermisch gehärtet wird.

Aufgabe der Erfindung war es, ein Verfahren zur Herstellung einer mehrschichtigen Lackierung bereitzustellen, welches es ermöglicht, in allen Lackschichten eines Mehrschichtaufbaus umweltfreundliche Beschichtungsmittel einzusetzen, um somit die Lösemittelemission der Gesamtlackierung auf ein Minimum zu senken, und welches gleichzeitig den gesamten Härtungsvorgang wesentlich verkürzt. Die erhaltenen Beschichtungen sollen sehr gute Härte, Zwischenschichthaftung sowie sehr gute Wasserfestigkeit, Benzin- und Chemikalienbeständigkeit aufweisen. Außerdem soll die Beständigkeit gegenüber Baumharz und Pankreatin verbessert werden und die Lackierungen sollen ein einwandfreies optisches Aussehen erhalten. Das Verfahren soll insbesondere zur Reparaturlackierung, beispielsweise von Kraftfahrzeugkarossen oder deren Teilen geeignet sein.

Die Aufgabe wird gelöst durch ein Verfahren zur Reparaturlackierung wie im Anspruch 1 definiert.

Die Beschichtungsmittel für die einzelnen Lackschichten können jeweils zusätzlich physikalisch trocknende und weitere chemisch vernetzende Bindemittel enthalten.

Es war überraschend und aus dem Stand der Technik nicht herleitbar, daß die mit dem erfindungsgemäßen Verfahren erhaltenen Mehrschichtlackierungen, bei denen jede der genannten Lackschichten mittels UV-Strahlung gehärtet wird, das gleiche, für eine Reparaturlackierung erforderliche, hohe Eigenschaftsniveau zeigen, wie es bisher mit den üblichen bewährten aber lösemittelbasierenden Reparaturlacken erzielt wurde. Das betrifft insbesondere solche Eigenschaften wie Schleifbarkeit, Haftung, Härte, Wasser- und Chemikalienbeständigkeit sowie Optik. Weitere Eigenschaften konnten sogar noch verbessert werden. So kann die Härtung des Gesamtaufbaus sehr rasch, z.B. im Bereich weniger Minuten, erfolgen. Es ist eine problemlose Applikation und rasche und vollständige Durchhärtung auch in hohen Schichtdicken und bei hoher Pigmentierung möglich. Überraschend wurde weiter gefunden, daß mit der erfindungsgemäßen Mehrschichtlackierung Benzin-, Baumharz- und Pankreatinbeständigkeit gegenüber einem lösemittelbasierenden Mehrschichtaufbau noch verbessert werden können.

Bei den im erfindungsgemäßen Verfahren einsetzbaren Füller-, Basislack-, Klarlack- beschichtungsmitteln handelt es sich um Beschichtungsmittel, die mittels UV-Strahlung über eine radikalische und/oder kationische Polymerisation vernetzen. Es kann sich dabei um wäßrige, lösemittelbasierende oder 100 %ige-Beschichtungsmittel, die ohne Lösungsmittel und ohne Wasser appliziert werden können, handeln. Bevorzugt werden festkörperreiche wäßrige oder lösemittelbasierende Beschichtungsmittel formuliert. Die Beschichtungsmittel enthalten dann nur geringe Anteile an organischen Lösemitteln.

Als mittels energiereicher Strahlung härtbare Bindemittel können im erfindungsgemäßen Verfahren in allen genannten Beschichtungsmitteln alle üblichen strahlenhärtbaren Bindemittel oder deren Mischungen eingesetzt werden, die dem Fachmann bekannt und in der Literatur beschrieben sind. Es handelt sich entweder um durch radikalische oder durch kationische Polymerisation vernetzbare Bindemittel. Bei ersteren entstehen durch Einwirkung von energiereicher Strahlung auf die Photoinitiatoren Radikale, die dann die Vernetzungsreaktion auslösen. Bei den kationisch härtenden Systemen werden durch die Bestrahlung aus Initiatoren Lewis-Säuren gebildet, die dann ihrerseits die Vernetzungsreaktion auslösen.

Bei den radikalisch härtenden Bindemitteln kann es sich z.B. um Prepolymere, wie Poly- oder Oligomere, die radikalisch polymerisierbare olefinische Doppelbindungen im Molekül aufweisen, handeln. Beispiele für Prepolymere oder Oligomere sind (meth)acrylfunktionelle (Meth)acrylcopolymere, Epoxidharz(meth)acrylate, z. B. aromatische Epoxidharz(meth)acrylate, Polyester(meth)acrylate, Polyether(meth)acrylate, Polyurethan(meth)acrylate, z.B. aliphatische Polyurethan(meth)acrylate, Amino(meth)acrylate, Silikon(meth)acrylate, Melamin(meth)acrylate, ungesättigte Polyurethane oder ungesättigte Polyester. Die zahlenmittlere Molmasse (Mn) dieser Verbindungen liegt bevorzugt bei 200 bis 10000. Bevorzugt sind durchschnittlich 2-20 radikalisch polymerisierbare olefinische Doppelbindungen im Molekül enthalten. Die Bindemittel können einzeln oder im Gemisch eingesetzt werden.

Der Ausdruck (meth)acryl steht für acryl und/oder methacryl.

Die Prepolymere können in Kombination mit Reaktivverdünnern, d.h. reaktiven polymerisierbaren flüssigen Monomeren, vorliegen. Die Reaktivverdünner werden im allgemeinen in Mengen von 1 - 50 Gew.-%, bevorzugt 5 - 30 Gew.-%, bezogen auf das Gesamtgewicht von Prepolymer und Reaktivverdünner, eingesetzt. Die Reaktivverdünner können mono-, di- oder polyungesättigt sein. Beispiele für monoungesättigte Reaktivverdünner sind: (Meth)acrylsäure und deren Ester, Maleinsäure und deren Halbester, Vinylacetat, Vinylether, substituierte Vinylharnstoffe, Styrol, Vinyltoluol. Beispiele für diungesättigte Reaktivverdünner sind: Di(meth)acrylate wie Alkylenglykol-di(meth)acrylat, Polyethylenglykol-di(meth)acrylat, 1,3-Butandiol-di(meth)acrylat, Vinyl(meth)acrylat, Allyl(meth)acrylat, Divinylbenzol, Dipropylenglykol-di(meth)acrylat, Hexandiol-di(meth)acrylat. Beispiel für polyungesättigte Reaktivverdünner sind: Glycerin-tri(meth)acrylat, Trimethylolpropan-tri(meth)acrylat, Pentaerythrit-tri(meth)acrylat, Pentaerythrit-tetra(meth)acrylat. Die Reaktivverdünner können einzeln oder im Gemisch eingesetzt werden. Bevorzugt werden als Reaktivverdünner Diacrylate wie z.B. Dipropylenglykoldiacrylat, Tripropylenglykoldiacrylat und/oder Hexandioldiacrylat eingesetzt.

Als Bindemittel für kationisch polymerisierbare Systeme können die üblichen dem Fachmann bekannten und in der Literatur beschriebenen Bindemittel eingesetzt werden. Es kann sich dabei beispielsweise um polyfunktionelle Epoxyoligomere, die mehr als zwei Epoxygruppen im Molekül enthalten, handeln. Es handelt sich beispielsweise um Polyalkylenglykoldiglycidylether, hydrierte BisphenoI-A-Glycidylether, Epoxyurethanharze, Glycerintriglycidylether, Diglycidylhexahydrophthalat, Diglycidylester von Dimersäuren, epoxidierte Derivate des (Methyl)cyclohexens, wie z.B. 3,4-Epoxycyclohexyl-methyl(3,4-epoxycyclohexan)carboxylat oder epoxidiertes Polybutadien. Das Zahlenmittel der Molmasse der Polyepoxidverbindungen liegt bevorzugt unter 10000. Es können auch Reaktivverdünner, wie z.B. Cyclohexenoxid, Butenoxid, Butandioldiglycidylether oder Hexandioldiglycidylether, eingesetzt werden.

Zur Herstellung der mittels energiereicher Strahlung härtbaren Füller-, Basislack-, Klarlack- Beschichtungsmittel können verschiedene radikalisch härtende Systeme, verschiedene kationisch härtende Systeme oder radikalisch und kationisch härtende Systeme miteinander kombiniert werden. Bevorzugt werden radikalisch härtende Systeme eingesetzt. Gemäß einer bevorzugten Ausführungsform werden für die Füller-, Basislack- und Klarlackschicht, oder für die Füller- und Decklackschicht jeweils die gleichen Bindemittel eingesetzt. Zur Herstellung von Füllern bevorzugt einsetzbare mittels energiereicher Strahlung radikalisch härtbare Bindemittel sind Epoxid(meth)acrylate, Polyurethan(meth)acrylate sowie Polyester(meth)acrylate. Besonders bevorzugt sind aromatische Epoxid(meth)acrylate. Die genannten Bindemittel sind im allgemeinen als Handelsprodukte erhältlich.
Zur Herstellung von Basislacken und Klarlacken bevorzugt einsetzbare mittels energiereicher Strahlung radikalisch härtbare Bindemittel sind Polyurethan(meth)acrylate, Polyester(meth)acrylate und acrylfunktionelle Poly(meth)acrylate. Besonders bevorzugt sind aliphatische Polyurethan(meth)acrylate und/oder acrylfunktionelle Poly(meth)acrylate. Die genannten Bindemittel sind im allgemeinen als Handelsprodukte erhältlich.
Bevorzugt wird im erfindungsgemäßen Verfahren zur Mehrschichtlackierung folgender Schichtaufbau verwendet: Füllerbeschichtungsmittel auf der Basis von Epoxid(meth)acrylaten, besonders bevorzugt auf Basis von aromatischen Epoxid(meth)acrylaten; als Decklackschicht eine Schicht aus Basislack und Klarlack, wobei jeweils die Beschichtungsmittel basieren auf Polyurethan(meth)acrylaten, Polyester(meth)acrylaten und/oder acrylfünktionellen Poly(meth)acrylaten, besonders bevorzugt aliphatischen Polyurethan(meth)acrylaten und/oder aliphatischen (meth)acrylfunktionellen Poly(meth)acrylaten.
Die unter Strahleneinwirkung härtenden Bindemittelsysteme enthalten Photoinitiatoren. Geeignete Photoinitiatoren sind beispielsweise solche, die im Wellenlängenbereich von 190 bis 600 nm absorbieren.
Beispiele für Photoinitiatoren für radikalisch härtende Systeme sind Benzoin und -derivate, Acetophenon, und -derivate, wie z.B. 2,2-Diacetoxyacetophenon, Benzophenon und -derivate, Thioxanthon und -derivate, Anthrachinon, 1-Benzoylcyclohexanol, phosphororganische Verbindungen, wie z.B. Acylphosphinoxide. Die Photoinitiatoren werden beispielsweise in Mengen von 0,1-7 Gew.-%, bevorzugt 0,5 - 5 Gew.-% eingesetzt, bezogen auf die Summe von radikalisch polymerisierbaren Prepolymeren, Reaktivverdünnern und Photoinitiatoren. Die Photoinitiatoren können einzeln oder in Kombination eingesetzt werden. Außerdem können weitere synergistische Komponenten, z.B. tertiäre Amine, eingesetzt werden.
Photoinitiatoren fiir kationisch härtende Systeme sind Substanzen, die als Oniumsalze bekannt sind, welche unter Strahleneinwirkung photolytisch Lewis-Säuren freisetzen.
Beispiele hierfür sind Diazoniumsalze, Sulfoniumsalze oder Jodoniumsalze. Bevorzugt sind Triarylsulfoniumsalze. Die Photoinitiatoren für kationisch härtende Systeme können in Mengen von 0,5 bis 5 Gew.-%, bezogen auf die Summe von kationisch polymerisierbaren Prepolymeren, Reaktivverdünnern und Initiatoren, einzeln oder als Gemische eingesetzt werden.
Die im erfindungsgemäßen Reparaturlackierungs-Verfahren einsetzbaren Füller-, Basislack- und Klarlack- beschichtungsmittel können ausschließlich mittels energiereicher Strahlung härtbare Bindemittel enthalten, sie können jedoch auch neben den mittels energiereicher Strahlung härtbaren Bindemitteln noch physikalisch trocknende und/oder weitere chemisch vernetzende Bindemittel enthalten. Die zusätzlich einsetzbaren Bindemittel können lösemittelbasierend oder wasserbasierend sein. Als zusätzlich einsetzbare Bindemittel kommen alle üblichen und dem Fachmann bekannten Bindemittelsysteme in Frage, wie sie in der Fahrzeug- bzw. Fahrzeugreparaturlackierung für die jeweiligen Beschichtungsmittel eingesetzt werden.
Beispiele für physikalisch trocknende Bindemittel sind Epoxidharze, Acrylat-, Polyurethan-, Polyurethanharnstoff-, Polyesterurethan- und Polyesterharze sowie Modifizierungen dieser Harze, wie z.B. acrylierte und/oder siliziummodifiziere Polyurethan- oder Polyesterharze oder sogenannte Schoßpolymerisate, d.h. in Gegenwart von z.B. Polyester- und/oder Polyurethanharzen hergestellte (Meth)acrylatcopolymere.
Beispiele für chemisch vernetzende Bindemittel sind zweikomponentige Bindemittelsysteme auf Basis von isocyanatfunktionellen und hydroxyfunktionellen und/oder aminfunktionellen Komponenten, von hydroxyfunktionellen und Anhydridkomponenten, von Polyamin- und Epoxidkomponenten oder von Polyamin- und acryloylfunktionellen Komponenten.
Die beispielhaft genannten Bindemittelsysteme sind dem Fachmann bekannt und in der Literatur ausführlich beschrieben.
Die im erfindungsgemäßen Verfahren einsetzbaren Beschichtungsmittel können zusätzliche, für die Lackformulierung übliche Komponenten enthalten. Sie können z.B. lackübliche Additive enthalten. Bei den Additiven handelt es sich um die üblichen auf dem Lacksektor einsetzbaren Additive. Beispiele für solche Additive sind Verlaufsmittel , z.B. auf der Basis von (Meth)acryl-Homopolymerisaten oder Silikonölen, Antikratermittel, Antischaummittel, Katalysatoren, Haftvermittler, rheologiebeeinflussende Additive, Verdicker, Lichtschutzmittel. Die Additive werden in üblichen, dem Fachmann geläufigen Mengen eingesetzt.

Die im erfindungsgemäßen Verfahren einsetzbaren Beschichtungsmittel können geringe Mengen organische Lösemittel und/oder Wasser enthalten. Bei den Lösemitteln handelt es sich um übliche lacktechnische Lösemittel. Diese können aus der Herstellung der Bindemittel stammen oder werden separat zugegeben. Beispiele für solche Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C1- bis C6-Alkyl, Ethoxypropanol, Butylglykol; Glykole, z.B. Ethylenglykol, Propylenglykol und deren Oligomere, Ester, wie z.B. Butylacetat und Amylacetat, alkylierte Pyrrolidone, z.B. N-Methylpyrrolidon sowie Ketone, z.B. Methylethylketon, Aceton, Cyclohexanon; aromatische oder aliphatische Kohlenwasserstoffe, z.B. Toluol, Xylol oder lineare oder verzweigte aliphatische C6-C12-Kohlenwasserstoffe.

Im erfindungsgemäßen Verfahren einsetzbare Füllerbeschichtungsmittel können Füllstoffe und Pigmente enthalten. Es handelt sich dabei um die üblichen in der Lackindustrie einsetzbaren Füllstoffe und organischen oder anorganischen farbgebenden und/oder Korrosionsschutzpigmente. Beispiele für Pigmente sind Titandioxid, mikronisiertes Titandioxid, Eisenoxidpigmente, Ruß, Azopigmente, Zinkphosphat. Beispiele fiir Füllstoffe sind Siliciumdioxid, Aluminiumsilikat, Bariumsulfat und Talkum.

Bei der im erfindungsgemäßen Verfahren einsetzbaren Deckbeschichtung handelt es sich um eine Zweischicht-Basislack/Klarlacklackierung.

Im erfindungsgemäßen Verfahren einsetzbare Basislacke können farb- und/oder effektgebende Pigmente und gegebenenfalls Füllstoffe enthalten. Als farbgebende Pigmente sind alle lacküblichen Pigmente organischer oder anorganischer Natur geeignet. Beispiele für anorganische oder organische Farbpigmente sind Titandioxid, mikronisiertes Titandioxid, Eisenoxidpigmente, Ruß, Azopigmente, Phthalocyaninpigmente, Chinacridon- und Pyrrolopyrrolpigmente. Die Effektpigmente zeichnen sich insbesondere durch einen plättchenartigen Aufbau aus. Beispiele für Effektpigmente sind: Metallpigmente, z.B. aus Aluminium, Kupfer oder anderen Metallen; Interferenzpigmente, wie z.B. metalloxidbeschichtete Metallpigmente, z.B. titandioxidbeschichtetes oder mischoxidbeschichtetes Aluminium, beschichteter Glimmer, wie z.B. titandioxidbeschichteter Glimmer und Graphiteffektpigmente. Vorteilhaft können auch hier UV-härtende Pigmente und gegebenenfalls Füllstoffe eingesetzt werden, die mit UV-härtbaren Verbindungen, z.B. acrylfunktionellen Silanen, gecoated sind und in den Strahlenhärtungsprozeß mit einbezogen werden.

Auch in den im erfindungsgemäßen Verfahren einsetzbaren Klarlacken können vorteilhafterweise neben den für einen Klarlack üblichen Additiven zur Erhöhung der Kratzfestigkeit spezielle gecoatete transparente Füllstoffe enthalten. Als Füllstoffe kommen hier z.B. micronisiertes Aluminiumoxid oder micronisierte Siliciumoxide in Frage. Diese transparenten Füllstoffe sind mit Verbindungen gecoatet, die UV-härtbare Gruppen enthalten, z.B. mit acrylfunktionellen Silanen, und werden somit bei der Strahlenhärtung des Klarlackes mit einbezogen. Die Füllstoffe sind als Handelsprodukte, z.B. unter dem Namen AKTISIL , erhältlich.

Der Auftrag der Mehrschichtlackierung erfolgt im erfindungsgemäßen Verfahren auf gegebenenfalls vorbeschichtete Substrat. Bevorzugte Substrate sind Metall- oder Kunststoffsubstrate. Die Substrate können mit üblichen Grundierungs- oder weiteren Zwischenschichten, wie sie für die Mehrschichtlackierung auf dem Kraftfahrzeugsektor verwendet werden, beschichtet sein. Im erfindungsgemäßen Verfahren erfolgt die Applikation der einzelnen Lackschichten nach üblichen Verfahren, bevorzugt mittels Spritzauftrag.

Die Füllerbeschichtungsmittel werden insbesondere auf eine im Rahmen der Fahrzeugreparaturlackierung bereits vorbeschichtete bzw. vorbehandelte Fahrzeugkarosse bzw. deren Teile aufgebracht, sie können jedoch auch auf Altlackierungen aufgebracht werden. Sie können beispielsweise auf übliche lösemittel- oder wasserbasierende Spachtel, Grundierungen, Haftprimer oder weitere Zwischenschichten, wie sie für die Fahrzeugreparaturlackierung üblich sind, oder auf Altlackierungen, wie z.B. KTL-Untergründe, aufgebracht werden. Die Untergründe bzw. Lackschichten, auf die die Füllerschicht aufgebracht wird, können dabei bereits ausgehärtet oder vorgetrocknet sein. Bei den im Rahmen der Reparaturlackierung bereits applizierte Spachtel oder Grundierungen handelt es sich beispielsweise um solche auf Basis peroxidhärtender ungesättigter Polyester, säurehärtender Polyvinylbutyrale, physikalisch trocknender Bindemittel, z.B. Polyurethane oder Arcrylate, sowie zweikomponentiger Bindemittel auf Basis Epoxid/Polyamin oder Hydroxykomponente/Polyisocyanat.

Nach Applikation des Füllers auf einen der vorstehend genannten Untergründe wird die Füllerschicht, gegebenenfalls nach einer kurzen Ablüftphase, UV-Strahlung, ausgesetzt. Bevorzugt sind UV-Strahlungsquellen mit Emissionen im Wellenlängenbereich von 180 bis 420 nm, insbesondere von 200 bis 400 nm. Beispiele für derartige UV-Strahlungsquellen sind gegebenenfalls dotierte Quecksilberhochdruck-, mitteldruck- und niederdruckstrahler, Gasentladungsröhren, wie z.B. Xenonniedrdrucklampen, gepulste und ungepulste UV-Laser, UV-Punktstrahler, wie z.B. UV-emittierende Dioden und Schwarzlichtröhren. Bevorzugt erfolgt die Bestrahlung mit gepulster UV-Strahlung. Als Strahlungsquelle werden dann besonders bevorzugt sogenannte Hochenergieelektronen-Blitzeinrichtungen (kurz: UV-Blitzlampen) eingesetzt.

Bevorzugte UV-Blitzlampen emittieren Licht einer Wellenlänge von 200 - 900 nm mit einem Maximum bei etwa 300 bis 500 nm. Die UV-Blitzlampen enthalten bevorzugt einen Mehrzahl von Blitzröhren, beispielsweise mit inertem Gas, wie Xenon, gefüllte Quarzröhren. Die UV-Blitzlampen sollen an der Oberfläche des zu härtenden Überzuges eine Beleuchtungsstärke von mindestens 10 Megalux, bevorzugt von 10 - 80 Megalux pro Blitzentladung bewirken. Die Energie pro Blitzentladung soll bevorzugt 1 - 10 kJoule betragen. Bei den UV-Blitzlampen handelt es sich bevorzugt um transportable Einrichtungen, die direkt vor einer auszubessernden Schadstelle positioniert werden können. Je nach den Gegebenheiten sind ein oder mehrere UV-Blitzlampen einsetzbar. Einsetzbare UV-Blitzlampen sind beispielsweise beschrieben in den WO-A-9411123 und in der EP-A-525 340. UV-Blitzlampen sind im Handel erhältlich.

Die Trocknung bzw. Härtung der Füllerschicht kann durch eine Mehrzahl aufeinanderfolgender Blitzentladungen erfolgen. Bevorzugt werden 1 bis 40 aufeinanderfolgende Blitzentladungen ausgelöst. Der Abstand der UV-Blitzlampe zur zu bestrahlenden Substratoberfläche kann dabei 5 - 50 cm, bevorzugt 10 - 25 cm, besonders bevorzugt 15 - 20 cm betragen. Die Abschirmung der UV-Lampen zur Vermeidung von Strahlungsaustritt kann dabei z.B. durch Verwendung eines entsprechend ausgekleideten Schutzgehäuses um die transportable Lampeneinheit oder mit Hilfe anderer, dem Fachmann bekannter Sicherheitsmaßnahmen, erfolgen.

Die Bestrahlungsdauer liegt insgesamt im Bereich weniger Sekunden, beispielsweise im Bereich von 3 Millisekunden bis 400 Sekunden, bevorzugt von 4 bis 160 Sekunden, je nach Anzahl der gewählten Blitzentladungen. Die Blitze können beispielsweise ca. alle 4 Sekunden ausgelöst werden. Die UV-Blitzlampen sind jederzeit sofort einsatzbereit, d.h. sie bedürfen keiner Einbrennzeit und können zwischen zwei zeitlich etwas auseinanderliegenden Härtungs- bzw. Bestrahlungsvorgängen ausgeschaltet bleiben, ohne beim erneuten Bestrahlungsvorgang durch die Einbrennphase zeitliche Verluste hinnehmen zu müssen.

Ein besonderer Vorteil des erfindungsgemäßen Verfahrens liegt, darin, daß bei der Füllerapplikation in einem Arbeitsgang hohe Schichtdicken von beispielsweise 300-400 µm aufgebracht werden können (ohne Zwischenschleifen) und die Überzüge schnell durchhärten und nach sehr kurzer Zeit gut schleifbar sind. Auch bei sehr hoher Pigmentierung, z.B. bei einer Pigment-Volumen-Konzentartion (PVK) von etwa 45 %, und großer Schichtdicke kann eine vollständige und rasche Durchhärtung erreicht werden, indem das Füllerbeschichtungsmittel in mehreren, bevorzugt zwei, Spritzgängen appliziert wird und nach dem ersten Spritzgang bzw. nach den weiteren Spritzgängen, wenn insgesamt mehr als zwei Spritzgänge erfolgen, eine Zwischenbestrahlung erfolgt. So werden z.B. in einem ersten Spritzgang beispielsweise 100 bis 200 µm aufgebracht, mit z.B. 2 - 5 Blitzen erfolgt eine Zwischenhärtung, anschließend wird in einem zweiten Spritzgang eine weitere Schicht von z.B. 100 bis 200 µm aufgebracht und mit der erforderlichen Anzahl von Blitzentladungen erfolgt die vollständige Härtung.

Sind in den erfindungsgemäß einsetzbaren Füllerbeschichhtungsmitteln neben den strahlenhärtbaren Bindemitteln noch weitere Bindemittel enthalten, so reichen die mittels der UV-Bestrahlung durch die Blitzlampe erzeugten Temperaturen auf der Beschichtung im allgemeinen aus, um die zusätzlich verwendeten Bindemittel zu härten. Ein separater Härtungsvorgang ist nicht erforderlich.

Nach vollständiger Härtung der Füllerschicht wird im erfindungsgemäßen Verfahren auf die Füllerschicht die mittels energiereicher Strahlung härtbare Deckbeschichtung aus einer farb- und/oder effektgebenden Basislackschicht und einer transparenten Klarlackschicht aufgebracht.

Im nächsten Schritt des erfindungsgemäßen Verfahrens erfolgt der Auftrag der mittels energiereicher Strahlung härtbaren Klarlackschicht. Der Klarlack wird naß-in-naß, gegebenenfalls nach kurzem Ablüften bei Raumtemperatur, auf den Basislack aufgebracht. Anschließend erfolgt die Bestrahlung, wobei Basislack und Klarlack in einem Arbeitsschritt gemeinsam bestrahlt bzw. gehärtet werden.

Mit dem erfindungsgemäße Verfahren erhält man in sehr kurzer Zeit Mehrschichtüberzüge mit großer Härte, hoher Kratzfestigkeit sowie sehr guter Wasser-, Chemikalien- und Benzinbeständigkeit und ausgezeichneter Optik. Die einzelnen Lackschichten zeigen eine sehr gute Zwischenschichthaftung und sehr gute Anlöseresistenz gegenüber darunter bzw. darüberliegenden Lackschichten. Besonders gut ausgeprägt sind letzgenannten Eigenschaften bei Verwendung gleicher strahlenhärtbarer Bindemittel, d.h. gleicher Prepolyemere/Oligomere und/oder gleicher Reaktivverdünner in den verschiedenen Lackschichten, da wo dies sinnvoll und möglich ist, beispielsweise in Basislack und Klarlack.
Die Überzüge entsprechen ansonsten den Anforderungen an einen Reparaturlackaufbau auf dem Gebiet der Fahrzeuglackierung. Die Trocknung bzw. Härtung der Überzüge erfolgt im Vergleich zu in üblicher Weise getrockneten bzw. gehärteten wasserbasierenden und/oder lösemittelbasierenden Reparaturlackaufbauten in maßgebend verkürzter Zeit. Beispielsweise ist es möglich, den gesamten Trocknungs- bzw. Härtungsprozeß, innerhalb von ca. 10 - 30 Minuten, bevorzugt 10 - 20 Minuten, zu beenden.

Gegenüber einem üblichen lösemittelbasierenden Reparaturlackaufbau, der an sich schon ein hohes Eigenschaftsniveau aufweist, werden mit dem erfindungsgemäßen Verfahren noch Vorteile erzielt. So können beispielsweise sehr dicke Füllerschichten in einem Arbeitsgang (ohne Zwischenschliff) appliziert und gehärtet werden und auch bei hoch pigmentierten Füllern (beispielsweise bei einer Pigment/Volumen-Konzentration (PVK) von 30 bis 45% oder mehr) in hoher Schichtdicke ist eine vollständige rasche Durchhärtung und gute Schleifbarkeit nach kurzer Trockenzeit möglich. Es sind beispielsweise Füllerschichten in einer Dicke von 200 bis 400 µm, bevorzugt 300 bis 400 µm möglich.
Desweiteren zeigt der erfindungsgemäße Mehrschichtaufbau Vorteile bezüglich Kraftstoff-, Baumharz- und Pankreatinbeständigkeit.

Ein weiterer Vorteil besteht darin, daß in solchen Fällen, wo aus technologischen oder ökonomischen Gründen auf einen Klarlack im Mehrschichtaufbau verzichtet werden muß bzw. soll, z.B. bei der Lackierung von Fahrzeuginnenbereichen, wie Motorraum, Kofferraum, Türfalze, oder bei der Lackierung von strukturierten Kunststoffoberflächen, problemlos der Klarlack weggelassen werden kann. Der mittels UV-Strahlung gehärtete Basislack erfüllt ohne weiteres und ohne jegliche Modifizierung die Funktion des Klarlackes, z.B. bezüglich Härte und Kratzfestigkeit.

Das erfindungsgemäße Verfahren wird eingesetzt in der Fahrzeugreparaturlackierung, insbesondere zur Reparaturlackierung von Fahrzeugteilen, kleineren Schadstellen und zum Spotrepair.

### Referenz-Beispiel(nicht erfindungsgemäß)

### Herstellung einer Mehrschichtlackierung

Es wird eine Mehrschichtlackierung erstellt aus den nachstenden beschriebenen Füller-, Basislack- und Klarlackbeschichtungsmitteln.

### 1. Herstellung eines Füllers

Folgende Komponenten wurden miteinander vermischt und mittels Schnellrührer einige Minuten dispergiert (alle Angaben beziehen sich auf das Gewicht):
131 Teile eines handelsüblichen aromatischen Epoxyacrylates
56 Teile Hexandioldiacrylat
9 Teile eines handelsüblichen Haftvermittlers
127 Teile handelsüblicher Schwerspat
126 Teile handelsübliches Kaolin
6,1 Teile einer Mischung handelsüblicher Photoinitiatoren (Arylphosphinoxid- und Acetophenonderivate)
113 Teile Butylacetat

### 2. Herstellung eines Basislackes

Folgende Komponenten wurden miteinander vermischt und mittels Schnellrührer einige Minuten dispergiert (alle Angaben beziehen sich auf das Gewicht):
476 Teile eines handelsüblichen aliphatischen Polyurethanacrylates
13 Teile eines handlsüblichen Verlaufsmittels
223 Teile Titandioxid
25 Teile einer Mischung handelsüblicher Photoinitiatoren (Arylphosphinoxid- und Acetophenonderivate)
110 Teile Butylacetat

### 3. Herstellung eines Klarlackes

Folgende Komponenten wurden miteinander vermischt und mittels Schnellrührer einige Minuten homogenisiert (alle Angaben beziehen sich auf das Gewicht):
114 Teile eines handelsüblichen aliphatischen Polyurethanacrylates
0,3 Teile eines handlsüblichen Verlaufsmittels
7,2 Teile einer Mischung handelsüblicher Photoinitiatoren (Arylphosphinoxid- und Acetophenonderivate)
44 Teile Butylacetat
1 Teil eines handelsüblichen Lichtschutzmittels (HALS-Typ)
1 Teil eines handelsüblichen UV-Absorbers (Benztriazol-Typ)

### Erstellung eines Mehrschichtaufbaus

Der wie vorstehend beschrieben hergestellte Füller wird auf KTL-beschichtete Bleche aufgebracht. Dazu wird zunächst in einem Arbeitsgang eine Füllerschicht in einer resultierenden Trockenfilmschichtdicke von ca. 300 µm aufgebracht und nach kurzer Ablüftzeit bei Raumtemperatur wird die Füllerschicht der Bestrahlung durch eine UV-Blitzlampe (3500 Ws) ausgesetzt. Es wird mit 30 Blitzen (ca. 120 s) bestrahlt.

Anschließend wird der Füller geschliffen und der wie vörstehend beschrieben hergestellte Basislack in einer resultierenden Trockenfilmshichtdicke von ca. 60 µm überlackiert. Nach kurzer Ablüftzeit bei Raumtemperatur wird die Basislackschicht der Bestrahlung durch eine UV-Blitzlampe (3500 Ws) ausgesetzt. Es wird mit 20 Blitzen (ca. 80 s) bestrahlt.

Anschließend wird der wie vorstehend beschrieben hergestellte Klarlack in einer resultierenden Trockenfilmschichtdicke von 60 µm aufgebracht. Nach kurzer Ablüftzeit bei Raumtemperatur wird die Klarlackschicht der Bestrahlung durch eine UV-Blitzlampe (3500 Ws) ausgesetzt. Es wird mit 20 Blitzen (ca. 80 s) bestrahlt.

Nachfolgend sind die Ergebnisse der lacktechnischen Untersuchungen dargestellt:

| Eigenschaft | Referenz-Mehrschichtaufbau | Vergleichs-Mehrschichtaufbau (1) |
|---|---|---|
| Beständigkeit (2) | | |
| gegenüber: | | |
| Kraftstoff | 0 | 3-4 |
| Baumharz | 0-1 | 2 |
| Pankreatin | 3 | 4 |
| HCl | 0 | 0 |
| H₂SO₄10 %ig | 0 | 0 |
| NaOH | 0 | 0 |
| Optik | i.O. | i.O. |
| Feucht/Warm-Test (3) (4) | 0/0 | |
| Haftung (5) | 0-1 | |
| Haftung (5) nach | | |
| Feucht/Warm-Test (3) | 0-1 | |

| | | |
|---|---|---|
| (1) Es wurde zum Vergleich ein üblicher lösemittelbasierender Reparaturlackaufbau aus 2K-Polyurethan-Füller, konventionellem CAB-haltigem Basislack und 2K-Klarlack eingesetzt. | | |
| (2) VDA-Test entsprechend VDA-Prüfblatt 621/612 | | |
| (3) Feucht/Warm-Test nach DIN 50017 | | |
| (4) Beurteilung der Blasenbildung nach DIN 53209 | | |
| (5) Gitterschnitt in Anlehnung an DIN 53151 i.O. : in Ordnung | | |

## Patentansprüche

1. Verfahren zur Reparaturlackierung von Kraftfahrzeugkarossen oder deren Teilen durch Aufbringen eines Füllerbeschichtungsmittels auf ein gegebenenfalls mit einem Grundierungs- und/oder weiteren Beschichtungsmitteln vorbeschichtetes Substrat und anschließendes Applizieren einer Deckbeschichtung aus einer farb- und/oder effektgebenden Basislackschicht und einer transparenten Klarlackschicht, **dadurch gekennzeichnet, dass** als Füller, als Basislack und als Klarlack Beschichtungsmittel verwendet werden, welche durch radikalische und/oder kationische Polymerisation härtbare Bindemittel enthalten und wobei diese Bindemittel mittels UV-Strahlung gehärtet werden, wobei die Füllerschicht vollständig ausgehärtet und anschließend die Basislackschicht und Klarlackschicht naß-in-naß appliziert und gemeinsam gehärtet werden.

2. Verfahren nach Anspruch 1, **dadurch gekennzeichnet, dass** die Härtung mittels gepulster UV-Strahiung erfolgt.

3. Verfahren nach Anspruch 1 oder 2, **dadurch gekennzeichnet, dass** als durch radikalische Polymerisation härtbare Bindemittel aromatische Epoxidharz(meth)acrylate, aliphatische Polyurethan(meth)acrylate und/oder (meth)acrylfunktionelle (Meth)acrylcopolymere verwendet werden.

## Claims

1. A process for the repair lacquering of motor-vehicle bodies or parts thereof by applying a filler coating agent onto a substrate which has optionally been precoated with a primer and/or with further coating agents and by subsequent application of a top coating consisting of a colour-imparting and/or effect-imparting basecoat layer and a transparent clear-lacquer layer, **characterised in that** by way of filler, by way of basecoat and by way of clear lacquer use is made of coating agents that contain binding agents capable of being cured by radical and/or cationic polymerisation and wherein said binding agents are cured by means of UV radiation, whereby the filler layer cures completely and subsequently the basecoat layer and clear-lacquer layer are applied wet-in-wet and cured jointly.

2. Process according to Claim 1, **characterised in that** curing is effected by means of pulsed UV radiation.

3. Process according to Claim 1 or 2, **characterised in that** by way of binding agents capable of being cured by radical polymerisation use is made of aromatic epoxy-resin (meth)acrylates, aliphatic polyurethane (meth)acrylates and/or (meth)acrylic-functional (meth)acrylic copolymers.

## Revendications

1. Procédé de laquage de réparation de carrosseries de véhicule automobile ou d'éléments de celles-ci par dépôt d'un agent de revêtement extendeur sur un substrat le cas échéant prérevêtu avec un apprêt et/ou d'autres agents de revêtement et application consécutive d'un revêtement de finition fait d'une couche de base de base donnant une teinte et/ou un effet et d'une couche de laque transparente, **caractérisé en ce que** l'on utilise comme extendeur, comme laque de base et comme laque transparente des agents de revêtement qui contiennent des liants durcissables par polymérisation radicalaire et/ou cationique et ces liants étant durcis par exposition à un rayonnement ultra-violet, la couche d'extendeur étant entièrement durcie et ensuite la couche de laque de base et la couche de laque transparente étant appliquées par un procédé humide sur humide et conjointement durcies.

2. Procédé selon la revendication 1, **caractérisé en ce que** le durcissement se fait par exposition à un rayonnement ultraviolet pulsé.

3. Procédé selon la revendication 1 ou 2, **caractérisé en ce que** l'on utilise comme liants durcissables par polymérisation radicalaire des (méth)acrylates de résines époxydes aromatiques, des (méth)acrylates de polyuréthannes aliphatiques et/ou des copolymères (méth)acryliques à fonctionnalité (méth)acryle.
